# EUROPEAN PATENT APPLICATION

(11) **EP 0 664 651 A2**
(43) Date of publication of application: **26.07.1995**
(21) Application number: 95100573.5
(22) Date of filing: 17.01.1995
(51) Int. Cl.: H04N 7/26, H04N 7/173, H04N 5/926, H04N 7/32

(54) **Video communication system, with variable and fixed bit-rate storage equipment**

(30) Priority: 21.01.1994 JP 4938/94
(71) Applicant: HITACHI, LTD., Chiyoda-ku, Tokyo 100 (JP)
(72) Inventor: Kinoshita, Taizo, Tachikawa-shi, Tokyo (JP); Saito, Atsushi, Ichikawa-shi, Chiba (JP); Mimura, Itaru, Sayama-shi, Saitama (JP)
(74) Representative: Strehl Schübel-Hopf Groening & Partner

(57) **Abstract**

In a video transmission system, raw video data input from an input device (ID) are transformed into coded data through a variable bit-rate coder (11T), and are written into storage equipment (3T) such as an optical disk device via a butter (21T). During the transmission, the coded data are read out from the storage equipment (3T) and are transmitted, via a buffer (22T) to a transmission line (N) at a low speed, at a high speed or at a varying speed different from the real-time transmission speed. In a video receiver, the coded data are received from the transmission line (N) via a buffer (22R) and are written into storage equipment (3R). To reproduce the data, a variable bit-rate decoder (41R) reads the coded data from storage equipment (3R) via a buffer (21R), decodes the initial video data, and displays them on a display device (OD).

## Description

### BACKGROUND OF THE INVENTION

### Field of the Invention

The present invention relates to video communication systems, and more specifically, to video communication systems that do not require storage equipment of a large capacity, but transfer data at low speed, high speed or varying speed, while maintaining high image quality with variable and fixed bit rate coding.

### Description of the Related Art

Fig. 8 illustrates a first example of a prior art video communication system.

In a video transmission system 6T, raw digital video data input by an imaging device ID, for example, are stored in storage equipment 3T such as an optical, magnetic, or magnetooptical disk device, and are coded by a low and variable bit-rate coder 51 before being transferred onto a transmission line N at a low speed or at a varying speed different from the real-time transmission speed.

In a video receiver 6R, the coded data received from the transmission line N are decoded into the original digital video data through a low and variable bit-rate decoder 61, and stored in storage equipment 3R such as an optical, magnetic, or magnetooptical disk device. For reproduction, the data are read out from the storage equipment 3R and displayed on a display device OD, for example.

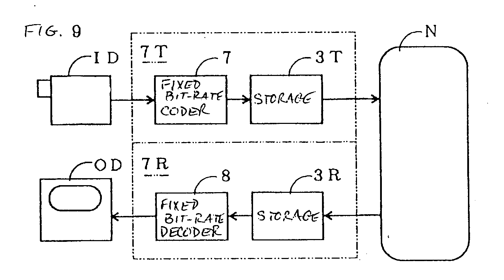

Fig. 9 illustrates a second example of a prior art video communication system.

In a video transmission system 7T, raw digital video data input by an imaging device ID are coded by a fixed bit-rate coder 7, and stored in storage equipment 3T such as an optical, magnetic or magnetooptical disk device. The data are read out from the storage equipment 3T when they are transferred onto a transmission line N at a real-time transmission speed or at a low speed different from the real-time transmission speed.

In a video receiver 8R, the coded data received from the transmission line N are stored in storage equipment 3R such as an optical, magnetic, or magnetooptical disk device. For reproduction the data are read from the storage equipment 3R, decoded into the original digital video data through a fixed bit-rate decoder 8, and displayed on a display device OD.

In the video transmission system 6T and the video receiver 6R according to the above-mentioned first prior art example, raw digital video data are stored in the storage equipment 3T and 3R, the storage equipment must have large capacities.

When the transmission line N is an asynchronous transfer mode (ATM) network, variable bit-rate coding suffers many limitations. Particularly, according to the CCITT Standardization Committee, a maximum rate and an average rate must be controlled so as to reach desired values within a specified period of time when the data are to be sent from a terminal to the ATM network. In practice, therefore, the ratio of the maximum rate to the average rate cannot be increased. Therefore, an image of a sufficiently high quality has not been feasible with variable bit-rate coding.

In the video transmission system 7T and the video receiver 7R according to the above-mentioned second prior art example in which the coded video data are stored, the capacity required for the storage equipment 3T and 3R is advantageously decreased. It is disadvantageous, however, in that the transfer speed is fixed, i.e., at real time or at a low speed, and in that the data cannot be transmitted at a varying speed.

### SUMMARY OF THE INVENTION

It is therefore an object of the present invention to provide a video transmission method, a video transmission system, a video reception method, a video receiver and storage equipment for variable bit-rate video, that do not require storage equipment of a large capacity, that transfer the data at a varying speed, and that maintain the inherently high quality of the original image by relying upon variable bit-rate coding.

This is particularly advantageous for realizing low-speed (and low-cost) transmission of video data that are to be recovered for later use. That is, a person who offers the service encodes the data at a varying bit-rate, stores the data, and transmits the data at any time at a rate that meets the state of the transmission line and needs of the sender and receiver. A person who utilizes the service can then receive the coded data, store the data and reproduce the data at any time.

According to a first aspect of the present invention, a video transmission method subjects input video data to variable bit-rate coding and writes the coded data into storage equipment, from which the coded data are read and transferred onto a transmission line.

According to a second aspect of the present invention, a video transmission system comprises a variable bit-rate coding means for coding input video data, a storage means for storing coded data output from said variable bit-rate coding means, and a transfer means that reads coded data from said storage means and transfers them onto a transmission line.

According to a third aspect of the present invention, the video transmission system also includes a buffer between the variable bit-rate coding means and the storage means to absorb changes in the coding rate, to set constant write data into the storage means at a constant rate, and to store the data continuously or noncontinuously in time.

According to a fourth aspect of the present invention, the transfer means of the video transmission system is provided with a buffer which transfers the data onto the transmission line at a low speed, at a high speed or at a varying speed which is different from the real-time transmission speed.

According to a fifth aspect of the present invention, the video transmission system also includes feedback control means for feedback of quantization steps for coding such that the coding rate output by the variable bit-rate coding means can be monitored, and to correct the past average rate to a desired average rate using succeeding frames that will be coded later.

According to a sixth aspect of the present invention, the video transmission system further includes feedforward control means for feedforward of quantization steps based upon the local statistical characteristics of the image.

According to a seventh aspect of the present invention, a video reception method writes coded data received from a transmission line into storage equipment, and reads the coded data from the storage equipment for subsequent variable bit rate decoding.

According to an eighth aspect of the present invention, a video receiver comprises a receiving means for receiving coded data from a transmission line, a storage means for storing the coded data, and a variable bit-rate decoding means that reads the coded data from the storage means and decodes them.

According to a ninth aspect of the present invention, storage equipment for handling variable bit-rate data comprises the video transmission system according to the above-mentioned second to sixth aspects, and the video receiver of the above-mentioned eighth aspect.

According to a tenth aspect of the present invention, storage equipment for handling variable bit-rate data comprises a variable bit-rate coding means for coding input video data, a storage means for storing the coded data output from the variable bit-rate coding means, and a variable bit-rate decoding means that reads the coded data from the storage means and decodes them.

In the video transmission method according to the first aspect and in the video transmission system according to the second aspect, the input video data are coded at a variable bit-rate and are then written into storage equipment. Therefore, the storage equipment need not have a large capacity. Moreover, the data coded at a variable bit-rate are read out from the storage equipment and transferred onto the transmission line, enabling the data to be transferred at a varying speed. Thus, the inherently high quality of the image can be maintained, owing to the variable bit-rate coding.

In the video transmission system according to the third aspect, a buffer is provided between the variable bit-rate coding means and the storage means in order to absorb changes in the coding rate and to set constant the rate of writing into the storage means, making it possible to control the variable bit-rate coding for realizing the image while maintaining its inherently high quality.

In the video transmission system according to the fourth aspect of the present invention, the transfer means is provided with a buffer which transfers the data onto the transmission line at a low speed, at a high speed or at a varying speed which is different from the real-time transmission speed. This makes it possible to increase the degree of freedom in the output speed and to accomplish the transfer at a low speed, at a high speed or at a varying speed. Whether the data be transferred at a low speed, at a high speed or at a varying speed is freely selected depending upon the cost of the circuit. When the data are to be transferred at a high speed, the buffer must have an increased capacity.

In the video transmission system according to the fifth aspect, a feedback control means is provided for monitoring the coding rate output by the variable bit-rate coding means and controlling the feedback of the step of quantizing the coding in order to adjust the past average rate to a desired average rate using n future frames that will be coded after the present moment. Here, a completely varying rate can be accomplished by increasing the value of n. A fixed rate can be accomplished by decreasing the value of n.

In the video transmission system according to the sixth aspect, a feedforward control means is provided for feedforward control of the step of quantization based upon the local statistical characteristics of the image. This makes it possible to adaptively quantize depending upon the presence or absence of edges and the magnitude of motion within the image and, hence, to draw out the data in its inherently bursting manner.

In the video reception method according to the seventh aspect and in the video transmission system according to the eighth aspect, the coded data received from the transmission line are written into storage equipment, which need not have a large capacity. Moreover, the coded data are read out from the storage equipment and are decoded at a variable bit rate making it possible to transfer the data at a variable rate as well as to obtain the ensuing image with its inherently high quality maintained, owing to the variable bit-rate coding.

In storage equipment for handling variable bit-rate data according to the ninth aspect, the video transmission system is provided with the features of the above-mentioned second to sixth aspects, and the video receiver is provided with the features of the above-mentioned eighth aspect. Therefore, variable bit-rate transfer is accomplished without requiring storage equipment of a large capacity, and the ensuing image maintains its inherently high quality, owing to the variable bit-rate coding.

In storage equipment for handling variable bit-rate data according to the tenth aspect, the input video data are coded at a variable bit rate and are written into the storage equipment. Therefore, the storage equipment may have a smaller capacity. Moreover, the coded data are read out from the storage equipment and are decoded at a variable rate, making it possible to transfer the data at a variable rate, thus maintaining the inherently high image quality, owing to the variable bit-rate coding.

### BRIEF DESCRIPTION OF THE DRAWINGS

The present invention will be described in further detail by way of embodiments shown in the drawings, which are illustrative only.

Fig. 1 is a diagram illustrating a video transmission system and a video receiver according to a first embodiment of the present invention.

Fig. 2 is a diagram explaining variable bit-rate recording/reproduction for the optical disk device.

Fig. 3 is a diagram illustrating a video transmission system and a video receiver according to a second embodiment of the present invention.

Fig. 4 is a diagram illustrating a variable bit-rate coder useful in the video transmission system of Fig. 3.

Fig. 5 is a diagram illustrating a video transmission system and a video receiver according to a third embodiment of the present invention.

Fig. 6 is a diagram illustrating a variable bit-rate coder useful in the video transmission system of Fig. 5.

Fig. 7 is a diagram illustrating storage equipment for handling variable bit-rate data according to a fourth embodiment of the present invention.

Fig. 8 is a diagram illustrating a first video transmission system and video receiver that are improved according to the teachings of the present invention.

Fig. 9 is a diagram illustrating a second video transmission system and video receiver that are improved according to the teachings of the present invention.

### DETAILED DESCRIPTION OF THE PREFERRED EMBODIMENTS

### First Embodiment

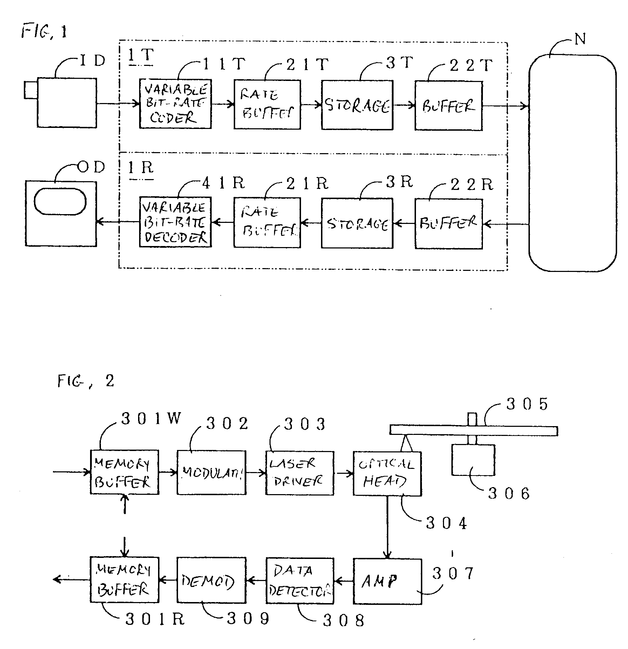

Fig. 1 illustrates a video transmission system 1T and a video receiver 1R according to a first embodiment of the present invention.

The video transmission system 1T comprises a variable bit-rate coder 11T, a buffer 21T, storage equipment 3T and a buffer 22T.

The variable bit-rate coder 11T transforms raw digital video data input from an imaging device ID into coded data. The output of the variable bit-rate coder 11T is completely variable bit-rate data, or data which are controlled at a constant average rate, defined below.

When the output of the variable bit-rate coder 11T is of a completely variable bit-rate, the buffer 21T smoothes the data rate by a noncritical amount, and writes the smoothed data into the storage equipment 3T. When the storage equipment 3T is, for example, an optical disk device (any suitable medium may be employed, depending on system design and requirements), the coded data are written down while increasing or decreasing the pick-up in a bursting manner for each sector of the disk. When the output of the variable bit-rate coder 11T is controlled to be at a constant average rate, the data are rendered to be of a fixed rate, and the video data of the fixed rate are written into the storage equipment 3T.

Fig. 2 is a diagram explaining the writing/reading of data into/from the optical disk device.

During the writing operation, a signal passing through a memory buffer 301W is channel-coded for an optical disk 305 by a modulator 302, an optical head 304 is driven by a laser driver 303, and the data are written into the optical disk 305. The optical disk 305 is rotated by a spindle motor 306, and the data are recorded into a unit of frame defined as "sector". Here, the memory buffer 301W may be constituted so as to exhibit the function of the buffer 21T.

During the reading operation, the recording signals are picked up by an amplifier 307, and the data are discriminated from control information by a data detector 308, demodulated through a demodulator 309, and output via a memory buffer 301R.

When the write/read clocks to the memory buffers 301W and 301R are in synchronism with each other, the data can be recorded and reproduced at a fixed rate. By adjusting the write/read clocks to be asynchronous, however, the data can be recorded and reproduced at a variable and bursting rate. It then, however, becomes necessary to bring the sector unit on the optical disk 305 into synchronism with the write/read clocks.

During the transmission, the buffer 22T reads the coded data from the storage equipment 3T and transfers them to a transmission line N such as an ATM network, at a variable rate in the same manner as the data are written for each of the sectors. Or, the data are transferred at a low speed or a high speed different from the real-time transmission speed.

The image receiver 1R comprises a buffer 22R, storage equipment 3R, a buffer 21R and a variable bit-rate decoder 41R.

The buffer 22R receives the coded data from the transmission line N such as the ATM network, adjusts the rate, and stores the data in the storage equipment 3R. The storage equipment 3R is, for example, the above-mentioned optical disk device.

During the reproduction, the buffer 21R reads the coded data from the storage equipment 3R using clocks on the reproducing side, and transfers the coded data to the variable bit-rate decoder 41R.

The variable bit-rate decoder 41R transforms the coded data into the original digital video data for output to the display device OD.

The video transmission system 1T and the video receiver 1R thus constitute storage equipment for handling variable bit-rate data.

It is desired that the variable bit-rate coder 11T, buffers 21T, 22T, 22R, 21R, and variable bit-rate decoder 41R are fabricated in the form of an LSI.

The output of the storage equipment 3T may be input to the buffer 21R. Moreover, the storage equipment 3T and 3R may be the same storage equipment (i.e., common to the transmission and reception systems).

According to the above-mentioned first embodiment, coded data are stored in the storage equipment 3T and 3R. Therefore, the storage equipment may have a smaller capacity. Moreover, the variable bit-rate coding makes it possible to obtain an image of an inherently high quality. It is further allowed to transfer the data at a varying speed by utilizing the ATM network or the like. The data can further be transferred at a fixed rate.

### Second Embodiment

The second embodiment is different from the first embodiment in that the buffer 21T between the variable bit-rate coder 11T and the storage equipment 3T is eliminated, and data are written into the storage equipment 3T at a fixed rate over an extended period of time.

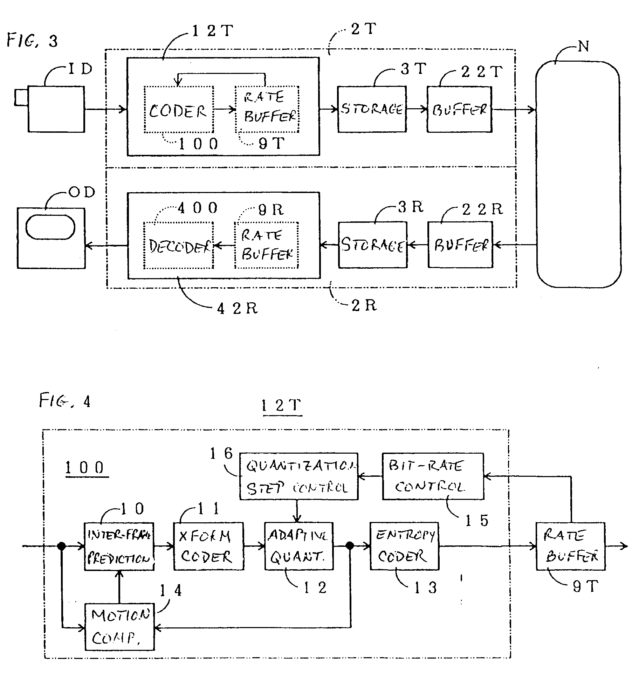

Fig. 3 illustrates a video transmission system 2T and a video receiver 2R according to the second embodiment of the present invention.

The variable bit-rate coder 12T is constituted by a coder 100 and a rate buffer 9T that feeds the signal for controlling the coded output speed back to the coder 100, to render the average output speed constant. In this case, the output of the coder 100 is of a completely variable bit-rate, but the average output rate of the rate buffer (i.e., output rate of the variable bit-rate coder 12T) is a fixed average rate over a long period of time. Even though the output rate may be a fixed rate over an extended period of time, the data are seen to be transferred at a varying bit-rate if viewed within a short period of time, which is adapted for coding the video data of a burst information source, making it possible to realize images of a high quality.

The storage equipment 3T and the buffer 22T are constituted in the same manner as those of the first embodiment, as are the buffer 22R and the storage equipment 3R.

The variable bit-rate decoder 42R is constituted of a decoder 400 and a rate buffer 9R. The function of the variable bit-rate decoder 42R is the same as those of the buffer 21R and the variable bit-rate decoder 41R of the first embodiment.

It is preferable to provide maximum and minimum value limits for the range of maximum quantization by the feedback control, from the standpoint of simplifying the processing.

Fig. 4 illustrates the constitution of the variable bit-rate coder 12T.

The coding system of this variable bit-rate coder 12T is based on the motion compensation prediction DCT (discrete cosine transform) coding that is used for TV telephone, TV meeting and CD-ROM recommended by CCITT and ISO-MPEG as an existing standardization system. That is, prediction between the frames is effected by an inter-frame prediction unit 10 and, at the same time, the motion is compensated by a motion compensation unit 14 to code a difference from the preceding frame. The difference is transformed and coded into a frequency component by a transform coder 11. The transform coding is executed by using, for example, a DCT circuit. The transform coefficient is quantized by the adaptive quantization unit 12, entropy coded through an entropy coder 13, smoothed in coding rate through the rate buffer 9, and output.

Unlike the case of ordinary fixed-rate coding, the feedback control of the quantization step is not such that the data occupation percentage of the rate buffer 9 approaches a constant value, but instead accurately and correctly determines a desired speed with the subsequent n frames.

For this purpose, the bit-rate control unit 15 controls the bit rate, and the quantization step control unit 16 correctly calculates the bit rate up to the present moment and controls the quantization step to absorb any lacking or excess rate up to the present moment using the subsequent n frames. An increase in the value n results in an increase in the time unit of an average by which the "speed" is determined, and a variable speed is substantially obtained, albeit with a "fixed average". On the other hand, a decrease in the value n results in a decrease in the time unit of the average by which the speed is determined, and thus a fixed (i.e., less variable) speed is substantially approached.

The video transmission equipment 2T and the video receiver 2R constitute the storage equipment for variable bit-rate data.

It is further preferable that the variable bit-rate coder 12T, buffers 22T, 22R, and variable bit-rate decoder 42R are fabricated in the form of an LSI.

The output of the storage equipment 3T may be input to the variable bit-rate decoder 42R. Furthermore, the storage equipment 3T and 3R may be the same storage equipment.

### Third Embodiment

The third embodiment is different in that the quantization is feedforward-controlled in addition to the feedback control of the second embodiment.

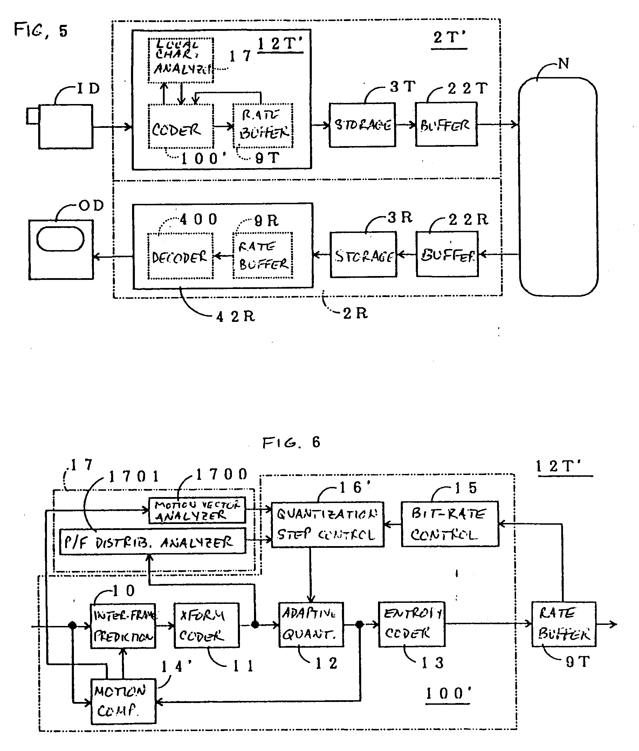

Fig. 5 illustrates a video transmission system 2T' and a video receiver 2R according to the third embodiment of the present invention.

In the video transmission system 2T', a local characteristics analyzer unit 17 picks up local statistical characteristics (characteristics of patterns corresponding to fineness and amplitude) in the frame of an image from the coder 100', analyzes local characteristics of the image based thereupon, and controls the quantization in the coder 100' based upon the result of the analysis. For instance, the local characteristics analyzer unit 17 analyzes the DCT coefficient in each of the blocks of the frame of an image, and assigns a quantization step in some stages in each block. The local characteristics analyzer unit 17 judges whether very high frequency components such as edges exist in the block, and assigns a fine quantization step when such components exist. The local characteristics analyzer unit 17 further detects motion vectors of the block by utilizing the fact that human vision is dull for a moving object, and coarsens the quantization step when the motion is large. Such an adaptive quantization makes it possible to draw out information in its inherently bursting manner.

If a center value of the feedback-controlled quantization step is denoted by Qc and a range of the feedforward-controlled quantization step is denoted by ±ΔQ, then the total range of the quantization control step is given by Qc ±ΔQ. Here, it is desired to limit in advance a maximum value and a minimum value of the range of optimum quantization steps by the feedback control and by the feedforward control from the standpoint of simplifying the processing.

Fig. 6 illustrates the constitution of the variable bit-rate coder 12T'.

A motion vector analyzer unit 1700 in the local characteristics analyzer unit 17 detects the magnitude of a motion vector calculated between frames in order to compensate for the motion. Based upon this result, the widths of the quantization step are assigned in a range from a large width to a small width in the order of decreasing motion vector, based upon the fact that a man's dynamic resolution for a large motion is considerably inferior to his static resolution. The range is readily determined in accordance with level of image quality desired and operational capabilities of the system as a whole. In the coding in compliance with the standardization, in general, motion vectors of four 8 × 8 pixel blocks of brightness (called "macro blocks") are calculated. In this case, the quantization steps based upon the four motion vectors are placed under the same conditions.

Next, a power/frequency distribution analyzer unit 1701 in the local characteristics analyzer unit 17 calculates the power (sum of squares) in the block of a coefficient after DCT operation. The degree of coefficient is made fine depending upon the magnitude of the power, i.e., the quantization step is made fine depending upon the frequency component. Furthermore, the frequency distribution in the block is analyzed. For instance, edges running vertically or laterally are detected by detecting the distribution of DCT coefficients in the block. Based upon this result, a block containing edges adaptively quantizes the coefficient by a degree that corresponds to the direction of the edge using a fine quantization step.

By executing the fine quantization with the block or the frame as a unit as described above, the inherently bursting nature of the coded data of an image is obtained in order to realize an ideal variable bit-rate coding. By combining this with feedback control of quantizing n frames so that the past accumulated coding bit-rate is converted into a desired average bit-rate using the future n frames, local variable bit-rate coding and fixed bit-rate coding (adapted to recording with a constant average bit-rate over an extended period of time) are simultaneously realized.

The video transmission system 2T' and the video receiver 2R constitute storage equipment for handling the variable bit-rate data.

It is further preferable to fabricate the variable bit-rate coder 12T', buffers 22T, 22R, and variable bit-rate decoder 42R in the form of an LSI.

The output of the storage equipment 3T may be input to the variable bit-rate decoder 42R. Furthermore, storage equipment 3T and 3R may be the same storage equipment.

### Fourth Embodiment

The fourth embodiment deals with storage equipment for handling variable bit-rate data without a transmission function.

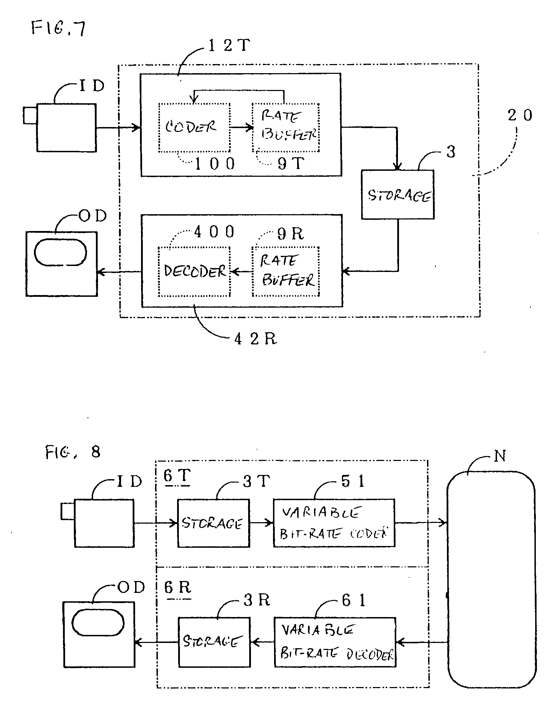

Fig. 7 is a diagram illustrating the constitution of storage equipment for handling variable bit-rate data according to the fourth embodiment.

During the recording, the storage equipment 20 transforms raw digital video data input from an imaging device ID into coded data through a variable bit-rate coder 12T, and writes them into storage equipment 3. During the reproduction, the coded data are read out by the variable bit-rate decoder 42R from the storage equipment 3, decoded into the initial digital video data, and are displayed on the display device OD or similar device, all without transmitting and receiving the data using a transmission line as described above.

This storage equipment 20 for variable bit-rate needs only a small capacity, and makes it possible to retain an image of an inherently high quality owing to the variable bit-rate processing.

## Claims

1. A video transmission method, comprising the steps of:
inputting video information;
coding the input video information with a variable bit rate to obtain coded video data;
storing the coded video data in a storage means for storing video data; and
reading out and transmitting the coded video data from the storage means.

2. The method of claim 1, further comprising the step of controlling the coding step by feeding back the coded video data to monitor the bit rate.

3. The method of claim 2, wherein the controlling step frame-wise adjusts the bit rate to bring the bit rate into a predetermined desired average rate range.

4. The method of claim 3, wherein the coding step includes the step of feeding forward a local statistical characteristic of the image represented in the coded video data.

5. The method of claim 4, wherein the local statistical characteristic is selected from the group consisting of a motion vector, power distribution and frequency distribution of the image.

6. The method of claim 4 or 5, wherein the feedforward control is performed by quantizing the image information in a predetermined range.

7. The method of any one of claims 2 to 6, wherein the feedback control is performed by quantizing the image information with one of a maximum value limitation and the minimum value limitation.

8. The method of any preceding claim, further comprising the step of:
buffering the coded video data to smooth out variations in the bit rate prior to the storing step, wherein the storing step stores the buffered video data at a constant average rate and in a continuous manner or in a bursting manner.

9. The method of any one of claims 1 to 7, further comprising the step of:
buffering the coded input video data so that the storing step is performed at a constant average rate and in a continuous manner, or in a bursting manner.

10. The method of any preceding claim, wherein the transmitting step includes the step of buffering the read-out coded video data, and then transmitting the coded video data at a speed different from real time.

11. The method of any preceding claim, wherein the transmitting step transmits the coded video data at a fixed base bit rate that accommodates temporary variable rate data representing bursting coded video data.

12. The method of any preceding claim, wherein the coding step is performed according to a discrete cosine transform.

13. A video receiving method, comprising the steps of:
receiving coded video data representing an image;
storing the received coded video data in a storage means for storing video data;
reading the stored coded video data from the storage means; and
decoding the read video data to obtain video data having a variable bit rate.

14. The method of claim 13, wherein the coded video data contain variable-bit rate information representing a variable bit rate of the video data.

15. The method of claim 13 or 14, further comprising the step of buffering the coded video data prior to said storing step, and/or prior to said decoding step.

16. A video communication method, comprising the transmission method of any one of claims 1 to 12 and the receiving method of any one of claims 13 to 15.

17. A video transmission system, comprising:
means (ID) for inputting video information;
means (IIT) for coding the input video information with a variable bit rate to obtain coded video data;
storage means (3T) for storing the coded video data; and
means (N) for reading out and transmitting the coded video data from the storage means (3T).

18. The system of claim 17, further comprising:
means (21T) for buffering the coded video data to smooth out variations in the bit rate prior to storage by said storage means (3T), wherein the storage means stores the buffered video data at a constant average rate and in a continuous manner or in a bursting manner.

19. The system of claim 17, further comprising:
means (21T) for buffering the coded video data so that the received coded video data are stored by said storage means at a constant average rate and in a continuous manner or in a bursting manner.

20. The system of any one of claims 17 to 19, buffering (22T) the read-out coded video data and for then transmitting the coded video data at a speed different from real time.

21. The system of any one of claims 17 to 20, further comprising:
means (9T) for controlling the coding means (100) by feeding back the coded video data to monitor the bit rate.

22. The system of claim 21, wherein the controlling means (9T) frame-wise adjusts the bit rate to bring the bit rate into a predetermined desired average rate range.

23. The system of claim 22, wherein the coding means includes means for feeding forward a local statistical characteristic of the image represented in the coded video data.

24. The system of claim 23, wherein the local statistical characteristic is selected from the group consisting of a motion vector, power distribution and frequency distribution of the image.

25. The system of any one of claims 17 to 24, wherein the transmitting means transmits the coded video data at a fixed base bit rate that accommodates temporary variable rate data representing bursting coded video data.

26. A video receiving system, comprising:
means for receiving coded video data representing an image;
storage means (3R) for storing the received coded video data;
means for reading the stored coded video data from the storage means; and
means (41R) for decoding the read video data to obtain video data having a variable bit rate.

27. The system of claim 26, wherein the coded video data contain variable-bit rate information representing a variable bit rate of the video data.

28. The system of claim 26 or 27, further comprising:
means (22R) for buffering the coded video data received by said receiving means prior to storage of the coded video data by said storage means (3R).

29. The system of any one of claims 26 to 28, further comprising:
means (21R) for buffering the coded video data read from the storage means (3R) by said reading means prior to decoding by said decoding means (41R).

30. A video communication system, comprising:
the transmission system of any one of claims 17 to 25 and the receiving system of any one of claims 26 to 29.
